# EUROPEAN PATENT APPLICATION

(11) **EP 4 397 719 A1**
(43) Date of publication of application: **10.07.2024**
(21) Application number: 22864865.5
(22) Date of filing: 18.07.2022
(51) Int. Cl.: C08L 83/04, C08G 77/12, C08G 77/20, C08G 77/00

(54) **ADDITION-CURABLE SILOXANE COMPOSITION**

(30) Priority: 31.08.2021 KR 20210115654
(71) Applicant: KCC Silicone Corporation, Seoul 06608 (KR)
(72) Inventor: SEO, Seung Kwang, Seoul 05678 (KR); AN, Jungmo, Incheon 21980 (KR); YOON, Min Gyu, Incheon 21614 (KR); CHOI, Sung Hwan, Pyeongtaek-si, Gyeonggi-do 17847 (KR); KO, Tae Ho, Yongin-si, Gyeonggi-do 17003 (KR); LEE, Kwanghun, Suwon-si, Gyeonggi-do 16563 (KR); PARK, Tae Hwan, Seoul 03719 (KR); KANG, Seunghyun, Suwon-si, Gyeonggi-do 16709 (KR); FUJIMOTO, Tetsuo, Ohta-shi, Gunma 373--0006 (JP); TAMURA, Osamu, Ohta-shi, Gunma 373--0024 (JP)
(74) Representative: Cabinet Laurent & Charras
(86) International application number: PCT/KR2022/010417
(87) International publication number: WO 2023/033356

(57) **Abstract**

The present invention relates to an addition-curable siloxane composition, and an electronic/electrical apparatus comprising a cured product prepared therefrom, the composition including: a first organopolysiloxane containing an aryl group and having a refractive index of 1.48 to 1.50 with respect to a wavelength of 589 nm; a second organopolysiloxane containing an aryl group and having a refractive index of 1.43 to 1.47 with respect to a wavelength of 589 nm; a third organopolysiloxane that includes an alkenyl group directly bonded to silicon and does not include an aryl group; an organohydrogenpolysiloxane that containing contains a hydrogen group directly bonded to silicon and has a refractive index of 1.43 to 1.50 with respect to a wavelength of 589 nm; and silica.

## Description

### TECHNICAL FIELD

The present invention relates to an addition-curable siloxane composition, with an appropriate viscosity, having excellent fluidity, having excellent thixotropic properties, and with which a cured film having excellent transparency, hardness, and adhesion is obtained.

### BACKGROUND ART

Epoxy resins have been typically used as sealing materials for light emitting diode (LED) elements. The epoxy resins have excellent light transmittance but their high elastic modulus, under various temperature conditions and upon temperature changes, causes cracking between wires, chips, and/or epoxy resins, and disconnections between wire bondings to break crystal structure of semiconductor materials, leading to deterioration in light emission efficiency. Moreover, the epoxy resins have unsatisfying physical properties in the aspects of thermal resistance and light stability with respect to brighter and shorter wavelengths. When UV rays or the like pass through the epoxy resins, the resins have a remarkable deterioration in optical and chemical properties due to breakage of organic polymer bonds. Accordingly, the sealing materials made of the epoxy resins turn yellow due to UV rays or the like, affecting the color of rays and thus decreasing life of light emitting devices.

To overcome such limitations, it has been suggested to apply silicone-based resins to LED sealing materials. Compared to organic resin-containing compositions, compositions containing the silicone-based resins are greatly heat resistant, weather resistant, and transparent, as well as hardly discolored and physically deteriorated, and thus are quite suitable as LED sealing materials. Still, the compositions containing the silicone-based resins are not satisfactory enough to secure high luminance despite excellent mechanical strength and chemical stability thereof.

In response, Japanese Patent No. 4009067 (Patent Document 1) discloses an addition-curable silicone resin composition including (A) an organopolysiloxane containing a phenyl group and two or more alkenyl groups in one molecule, (B) an organohydrogenpolysiloxane containing a phenyl group and two or more SiH groups in one molecule, and (C) a catalyst for hydrosilylation reaction. To be specific, the composition from Patent Document 1 includes a particular organopolysiloxane having a phenyl group and an alkenyl group and a particular organohydrogenpolysiloxane having a phenyl group due to the importance of increasing siloxane crosslinking density and π-π interaction between aromatic rings in enhancing refractive index of a cured product.

However, since the composition from Patent Document 1 has no thixotropic properties, and thus, when dispensed, are highly spreadable to hardly maintain its shape by itself, the composition is supposed to be dispensed after a dam is first formed when applied to a structure having walls such as a surface mount device (SMD) light emitting diode (LED), or a chip on board (COB) LED. In addition, a cured product obtained by dispensing the composition in an SMD type light emitting diode or COB type light emitting diode package has a flat surface or a very low aspect ratio that causes deterioration in light diffusivity, resulting in limitations in use.

Accordingly, there is a need for research and development on an addition-curable siloxane composition, with an appropriate viscosity, having excellent fluidity, having excellent thixotropic properties, and with which a cured film having excellent transparency, hardness, and adhesion is obtained, and thus being suitable as a sealing material for LED elements.

### DISCLOSURE OF THE INVENTION

### TECHNICAL PROBLEM

An aspect of the present invention provides an addition-curable siloxane composition, with an appropriate viscosity, having excellent fluidity, having excellent thixotropic properties, and with which a cured film having excellent transparency, hardness, and adhesion is obtained, and thus being suitable as a sealing material for LED elements.

### TECHNICAL SOLUTION

According to an aspect of the present invention, there is provided an addition-curable siloxane composition that includes a first organopolysiloxane including an aryl group and having a refractive index of 1.48 to 1.50 with respect to a wavelength of 589 nm, a second organopolysiloxane including an aryl group and having a refractive index of 1.43 to 1.47 with respect to a wavelength of 589 nm, a third organopolysiloxane not including an aryl group but including an alkenyl group directly bonded to silicon, an organohydrogenpolysiloxane including a hydrogen group directly bonded to silicon and having a refractive index of 1.43 to 1.50 with respect to a wavelength of 589 nm, and silica.

Another aspect of the present invention provides an electronic/electrical device including a cured product obtained by curing the addition-curable siloxane composition.

### ADVANTAGEOUS EFFECTS

An addition-curable siloxane composition according to the present invention has, with an appropriate viscosity, excellent fluidity, has excellent thixotropic properties, and is capable of obtaining a cured film having excellent transparency, and thus is quite suitable as a sealing material for self-dome shaped light emitting diodes even on flat substrates without walls or dams. In addition, the addition-curable siloxane composition is capable of obtaining a cured film having excellent hardness and adhesion to be applicable to various areas such as a sealing material, an adhesive, a coating agent, a potting agent, and a sealing agent of an LED element.

### BEST MODE FOR CARRYING OUT THE INVENTION

Hereinafter, the present invention will be described in detail.

A relationship between a structure of a general polysiloxane and a common name thereof is as follows.
(R₃SiO_{1/2})ₐ unit: M unit
(R₂SiO_{2/2})_{b} unit: D unit
(RSiO_{3/2})_{c} unit: T unit
(SiO_{4/2})_{d} unit: Q unit

In the present specification, an M unit, a D unit, a T unit, and a Q unit which are commonly used in the art are used together.

In addition, a "refractive index" of an organopolysiloxane of the present invention may be measured through methods well known in the art, and for example, the refractive index may be a value measured using a refractive index meter with respect to liquid organopolysiloxane before curing. For example, the refractive index may be a value measured at a wavelength of 589 nm at 25 °C, using an Abbe refractometer.

In addition, a functional group amount such as a 'vinyl group amount' may be measured through methods well known in the art, and for example, the functional group amount may be calculated through structural analysis such as H-NMR, C-NMR, and Si-NMR.

### Addition-curable siloxane composition

An addition-curable siloxane composition according to the present invention includes a first organopolysiloxane and a second organopolysiloxane each including an aryl group and having a different refractive index, a third organopolysiloxane not including an aryl group but including an alkenyl group directly bonded to silicon, an organohydrogenpolysiloxane including a hydrogen group directly bonded to silicon (SiH), and silica.

The siloxane composition of the present invention includes three different organopolysiloxanes, and has a minimum amount of an aryl group and a low modulus, thereby exhibiting excellent reliability and adhesion.

The first organopolysiloxane and the second organopolysiloxane each independently regulate an amount of an aryl group capable of improving refractive index of a cured product through π-π interaction between aromatic rings, and an amount of an alkyl group having a low refractive index to control the refractive index with respect to a wavelength of 589 nm, which thus contributes to an increase in light efficiency of the cured product. In addition, the first organopolysiloxane serves to improve hardness of the cured product due to a high amount of a T unit, but this may cause cracks in the cured product, and for this reason, the second organopolysiloxane is included together to control modulus of the cured product, thereby preventing easy cracking to control hardness and cracking of the cured product. Further, when the first organopolysiloxane and the second organopolysiloxane are solely included, the cured product may be discolored at high temperature or cracks may develop due to insufficient modulus control. In response, the third organopolysiloxane is included together to improve crack resistance and discoloration resistance of the cured product. Accordingly, the siloxane composition of the present invention includes three different organopolysiloxanes to increase the light efficiency of the cured product through refractive index control, and effectively and remarkably improve the heat resistance of the cured product to produce a cured product having high hardness without discoloration at high temperature, and thus the siloxane composition may be capable of obtaining a cured product having excellent reliability in mechanical, optical, and thermal properties.

### First organopolysiloxane

The first organopolysiloxane has a T unit in a large amount, and thus serves to implement high hardness upon curing.

The first organopolysiloxane includes an aryl group and has a refractive index of 1.48 to 1.50 with respect to a wavelength of 589 nm. For example, the first organopolysiloxane may be represented by Formula 1 below. That is, the first organopolysiloxane may include an M unit, a T unit, and a Q unit.

[Formula 1] [R¹R²R³SiO_{1/2}]ₐ[R⁴SiO_{3/2}]_{b}[R⁵SiO_{3/2}]_{c}[SiO_{4/2}]_{d}

In Formula 1,
R¹ to R³ are each independently a substituted or unsubstituted C₁₋₁₀ alkyl group, C₂₋₁₀ alkenyl group, or C₁₋₁₀ alkoxy group,
R⁴ and R⁵ are each independently a substituted or unsubstituted C₁₋₁₀ alkyl group, C₁₋₁₀ alkoxy group, or C₆₋₁₂ aryl group, where at least one is an aryl group,
a is greater than 0 and less than 1,
b is 0 or more and less than 1,
c+d is greater than 0 and less than 1, and
a+b+c+d is 1.

Each of R¹ to R³ may be the same or different, and for example, may be a substituted or unsubstituted C₁₋₅ alkyl group or C₂₋₅ alkenyl group, specifically, a substituted or unsubstituted C₁₋₃ alkyl group or C₂₋₄ alkenyl group.

In addition, each of R⁴ and R⁵ may be different, and may be a substituted or unsubstituted C₁₋₅ alkyl group, C₁₋₅ alkoxy group, or C₆₋₁₀ aryl group, where at least one may be an aryl group. To be specific, each of R⁴ and R⁵ may be different, and may be a substituted or unsubstituted C₁₋₃ alkyl group, C₁₋₄ alkoxy group, or C₆₋₈ aryl group, where at least one may be an aryl group.

In this case, the alkyl group and the alkenyl group may be linear or branched.

To be specific, the first organopolysiloxane may be represented by Formula 4 below. That is, the first organopolysiloxane may include an M unit and a T unit.

[Formula 4] [R¹₃SiO_{1/2}]ₓ[R²₃SiO_{1/2}]_{y}[R⁴SiCO_{3/2}]_{b}[R^{S}SiO_{3/2}]_{c}

In Formula 4,
R¹ is a substituted or unsubstituted C₁₋₁₀ alkyl group, specifically, C₁₋₅ alkyl group, more specifically, methyl group, ethyl group, or propyl group,
R² is a substituted or unsubstituted C₂₋₁₀ alkenyl group, specifically, C₂₋₅ alkenyl group, more specifically, vinyl group or allyl group,
R⁴ is a substituted or unsubstituted C₁₋₁₀ alkyl group, specifically, C₁₋₅ alkyl group, more specifically, methyl group, ethyl group, or propyl group,
R⁵ is a substituted or unsubstituted C₆₋₁₂ aryl group, specifically, C₆₋₁₀ aryl group, more specifically, phenyl group or tolyl group,
x+y+b+c is 1,
x+y is 0.1 to 0.5, or 0.2 to 0.4, and
b+c is 0.5 to 0.9, or 0.6 to 0.8.

The first organopolysiloxane may include an aryl group in an amount of 10 to 33 mol%, or 13 to 30 mol%, with respect to the total moles of all organic groups. When the aryl group amount included in the first organopolysiloxane is less than the above range, a cured product may have a lower refractive index to cause a reduction in light efficiency, and when the aryl group amount is greater than the above range, a cured product may be easily discolored at high temperatures . In this case, the aryl group amount may be a phenyl group amount.

In addition, the first organopolysiloxane may include an alkenyl group in an amount of 5 to 20 mol%, or 10 to 15 mol%, with respect to the total moles of all organic groups. When the alkenyl group amount included in the first organopolysiloxane is less than the above range, a cured product may fail to reach a target hardness due to reduced crosslinking density, and when the alkenyl group amount is greater than the above range, a reduced amount of a T unit may cause a cured product to hardly obtain a high hardness, and to be easily discolored at high temperatures. In this case, the alkenyl group amount may be a vinyl group amount.

The composition may include the first organopolysiloxane and the second organopolysiloxane in a weight ratio of 1:0.3 to 1:5.0, a weight ratio of 1:1.0 to 1:3.0, or a weight ratio of 1:1.3 to 1:2.5. When the weight ratio of the first organopolysiloxane and the second organopolysiloxane is less than the above range, that is, when a small amount of the second organopolysiloxane is included with respect to the weight of the first organopolysiloxane, a cured product may fail to reach a target hardness, and When the weight ratio of the first organopolysiloxane and the second organopolysiloxane is greater than the above range, that is, when an excess of the second organopolysiloxane is included with respect to the weight of the first organopolysiloxane, cracks may be easily caused in a cured product.

### Second organopolysiloxane

The second organopolysiloxane lowers modulus of a cured product, and thus serves to prevent easy cracking.

The second organopolysiloxane includes an aryl group and has a refractive index of 1.43 to 1.47 with respect to a wavelength of 589 nm. For example, the second organopolysiloxane may be represented by Formula 2 below. That is, the second organopolysiloxane may include an M unit, a D unit, a T unit, and a Q unit.

[Formula 2] [R⁶R⁷R⁸SiO_{1/2}]ₑ[R⁹R¹⁰SiO_{2/2}]_{f}[R¹¹SiO_{3/2}]_{g}[SiO_{4/2}]ₕ

In Formula 2 above,
R⁶ to R⁸ are each independently a substituted or unsubstituted C₁₋₁₀ alkyl group, C₂₋₁₀ alkenyl group, or C₁₋₁₀ alkoxy group,
R⁹ to R¹¹ are each independently a substituted or unsubstituted C₁₋₁₀ alkyl group, C₁₋₁₀ alkoxy group, or C₆₋₁₂ aryl group, where at least one is an aryl group,
e is greater than 0 and less than 1,
f is 0 or more and less than 1,
g+h is greater than 0 and less than 1, and
e+f+g+h is 1.

Each of R⁶ to R⁸ may be the same or different, and for example, may be a substituted or unsubstituted C₁₋₅ alkyl group or C₂₋₅ alkenyl group, specifically, a substituted or unsubstituted C₁₋₃ alkyl group or C₂₋₄ alkenyl group.

In addition, R⁹ and R¹⁰ may be the same or different, and may be a substituted or unsubstituted C₁₋₅ alkyl group. To be specific, R⁹ and R¹⁰ may be the same, and may be a substituted or unsubstituted C₁₋₃ alkyl group, more specifically, methyl group, ethyl group, or propyl group.

R¹¹ may be a substituted or unsubstituted C₆₋₁₂ aryl group. To be specific, R¹¹ may be a substituted or unsubstituted C₆₋₁₀ aryl group or C₆₋₈ aryl group.

In this case, the alkyl group and the alkenyl group may be linear or branched.

To be specific, the second organopolysiloxane may be represented by Formula 5 below. That is, the second organopolysiloxane may include an M unit, a D unit, and a T unit.

[Formula 5] [R⁶₃SiO_{1/2}]ₘ[R⁷₃SiO_{1/2}]ₙ[R⁹₂SiO_{2/2}]_{f}[R¹¹SiO_{3/2}]_{g}

In Formula 5,
R⁶ is a substituted or unsubstituted C₁₋₁₀ alkyl group, specifically, C₁₋₅ alkyl group, more specifically, methyl group, ethyl group, or propyl group,
R⁷ is a substituted or unsubstituted C₂₋₁₀ alkenyl group, specifically, C₂₋₅ alkenyl group, more specifically, vinyl group or allyl group,
R⁹ is a substituted or unsubstituted C₁₋₁₀ alkyl group, specifically, C₁₋₅ alkyl group, more specifically, methyl group, ethyl group, or propyl group,
R¹¹ is a substituted or unsubstituted C₆₋₁₂ aryl group, specifically, C₆₋₁₀ aryl group, more specifically, phenyl group or tolyl group,
m+n+f+g is 1,
m+n is 0.2 to 0.5, or 0.30 to 0.45, and
f+g is 0.5 to 0.8, or 0.55 to 0.70.

The second organopolysiloxane may include an aryl group in an amount of 1 to 30 mol%, or 5 to 20 mol%, with respect to the total moles of all organic groups. When the aryl group amount included in the second organopolysiloxane is less than the above range, a cured product may have a lower refractive index to cause a reduction in light efficiency, and when the aryl group amount is greater than the above range, a cured product may be easily discolored at high temperature. In this case, the aryl group amount may be a phenyl group amount.

In addition, the second organopolysiloxane may include an alkenyl group in an amount of 0.1 to 10 mol%, or 0.5 to 5 mol%, with respect to the total moles of all organic groups. When the alkenyl group amount included in the second organopolysiloxane is less than the above range, a cured product may have a significantly reduced hardness due to reduced crosslinking density, and when the alkenyl group amount is greater than the above range, a cured product may have greater modulus to allow easy cracking therein. In this case, the alkenyl group amount may be a vinyl group amount.

The second organopolysiloxane may have a viscosity of 0.1 to 10 Pa·s, or 0.5 to 5 Pa-s at 25 °C. When the viscosity at 25 °C of the second organopolysiloxane is less than the above range, a cured product may have higher brittleness, and when the viscosity at 25 °C is greater than the above range, workability of the siloxane composition may be insufficient due to reduced fluidity.

### Third organopolysiloxane

The third organopolysiloxane serves to improve crack resistance and discoloration resistance of a cured product.

The third organopolysiloxane does not include an aryl group but includes an alkenyl group directly bonded to silicon. For example, the third organopolysiloxane may be represented by Formula 3 below. That is, the third organopolysiloxane may include an M unit, a D unit, and a Q unit.

[Formula 3] [R¹⁵R¹⁶R¹⁷SiO_{1/2}]ᵢ[R¹⁸R¹⁹SiO_{2/2}]ⱼ[SiO_{4/2]k}

In Formula 3 above,
R¹⁵ to R¹⁹ are each independently a substituted or unsubstituted C₁₋₁₀ alkyl group, C₂₋₁₀ alkenyl group, or C₁₋₁₀ alkoxy group, where at least one is an alkenyl group,
i is greater than 0 and less than 1,
j is 0 or more and less than 1,
k is greater than 0.2 and less than 1, and
i+j+k is 1.

Each of R¹⁵ to R¹⁹ may be the same or different, and for example, may be a substituted or unsubstituted C₁₋₅ alkyl group or C₂₋₅ alkenyl group, specifically, a substituted or unsubstituted C₁₋₃ alkyl group or C₂₋₄ alkenyl group.

In this case, the alkyl group and the alkenyl group may be linear or branched.

To be specific, the third organopolysiloxane may be represented by Formula 6 below. That is, the third organopolysiloxane may include an M unit and a Q unit.

[Formula 6] [R¹⁵₃SiO_{1/2}]ₒ[R¹⁶₃SiO_{1/2}]ₚ[SiO_{4/2]k}

In Formula 6,
R¹⁵ is a substituted or unsubstituted C₁₋₁₀ alkyl group, specifically, C₁₋₅ alkyl group, more specifically, methyl group, ethyl group, or propyl group,
R¹⁶ is a substituted or unsubstituted C₂₋₁₀ alkenyl group, specifically, C₂₋₅ alkenyl group, more specifically, vinyl group or allyl group,
o+p+k is 1,
o+p is 0.2 to 0.7, or 0.4 to 0.6, and
k is 0.3 to 0.8, or 0.4 to 0.6.

The third organopolysiloxane may include an alkenyl group in an amount of 0.1 to 20 mol%, or 7 to 15 mol%, with respect to the total moles of all organic groups. When the alkenyl group amount included in the third organopolysiloxane is less than the above range, a cured product may have a significantly reduced hardness due to reduced crosslinking density, and when the alkenyl group amount is greater than the above range, a cured product may have greater modulus to allow easy cracking therein. In this case, the alkenyl group amount may be a vinyl group amount.

The third organopolysiloxane may be included in the composition in an amount of 5 to 60 parts by weight, 10 to 50 parts by weight, or 30 to 50 parts by weight, with respect to 100 parts by weight of the total amount of the first organopolysiloxane and the second organopolysiloxane. When the third organopolysiloxane amount is less than the above range, a cured product may be less crack resistant or less discoloration resistant, and when the third organopolysiloxane amount is greater than the above range, a cured product may fail to reach a target hardness.

### Organohydrogenpolysiloxane

The organohydrogenpolysiloxane serves to cure a siloxane composition.

The organohydrogenpolysiloxane includes at least one hydrogen group directly bonded to silicon (SiH) in one molecule. For example, the organohydrogenpolysiloxane may be represented by Formula 7 below.

[Formula 7] [R²⁰R²¹R²²SiO_{1/2}]_{q}[R²³R²⁴SiO_{2/2}]ᵢ[R²⁵SiO_{3/2}]ₛ[SiO_{4/2]t}

In Formula 7,
R²⁰ to R²² are each independently a hydrogen group, a substituted or unsubstituted C₁₋₁₀ alkyl group, C₂₋₁₀ alkenyl group, or C₁₋₁₀ alkoxy group, where at least one is a hydrogen group,
R²³ to R²⁵ are each independently a substituted or unsubstituted C₁₋₁₀ alkyl group, C₂₋₁₀ alkenyl group, or C₆₋₁₂ aryl group,
q is greater than 0 and less than 1,
r+t is 0 or more and less than 1,
s is greater than 0 and less than 1, and
q+r+s+t is 1.

To be specific, each of R²⁰ to R²² may be the same or different, and for example, may be a hydrogen group, a substituted or unsubstituted C₁₋₅ alkyl group or C₂₋₅ alkenyl group, where at least one may be a hydrogen group, specifically, a hydrogen group or a substituted or unsubstituted C₁₋₃ alkyl group, where at least one may be a hydrogen group.

In addition, each of R²³ to R²⁵ may be the same or different, and may be a substituted or unsubstituted C₆₋₁₀ aryl group, specifically, a substituted or unsubstituted C₆₋₈ aryl group, more specifically, phenyl group or tolyl group.

In this case, the alkyl group and the alkenyl group may be linear or branched.

The organohydrogenpolysiloxane may have a refractive index of 1.43 to 1.50, or 1.43 to 1.47, with respect to a wavelength of 589 nm.

In addition, the organohydrogenpolysiloxane may have a viscosity of 0.1 to 50 mPa.s or 1 to 30 mPa.s at 25 °C. When the viscosity at 25 °C of the organohydrogenpolysiloxane is less than the above range, due to high volatility, the ratio of a composition may change while being stored or low molecular weight organohydrogenpolysiloxane may be volatilized upon curing, and when the viscosity at 25 °C is greater than the above range, curing takes long due to a slow reaction rate upon molding of a cured product to damage workability when manufacturing a molded article using the curable organopolysiloxane composition.

The organohydrogenpolysiloxane may include an aryl group in an amount of 5 to 30 mol%, or 10 to 20 mol%, with respect to the total moles of all organic groups. When the aryl group amount included in the organohydrogenpolysiloxane is less than the above range, a cured product may have reduced light efficiency, and when the aryl group amount is greater than the above range, a cured product may be discolored, turning yellow at high temperature. In this case, the aryl group amount may be a phenyl group amount.

In addition, the total moles of a hydrogen group directly bonded to silicon (SiH) in the organohydrogenpolysiloxane is 0.3 to 3.5 times, 0.5 to 3.0 times, or 0.6 to 1.5 times, with respect to the total moles of an alkenyl group in the first to third organopolysiloxanes. As described above, when the total moles of SiH is less than the above range with respect to the moles of the alkenyl group, sufficient crosslinking density may be hardly achieved to cause non-curing or deteriorated mechanical properties, and when the total moles of SiH is greater than the above range, due to an excess of a hydrogen group, a sponging phenomenon may be caused in a cured product obtained through a dehydrogenation reaction.

### Silica

Silica serves to impart thixotropic properties to allow a siloxane composition to maintain a dome shape even when dispensed on a circuit board (PCB) without a wall or a dam.

The silica may be, for example, fumed silica, precipitated silica, silica gel, quartz powder, fused quartz, or the like. To be specific, the silica may include fumed silica or precipitated silica.

In addition, the silica may have an average particle diameter of 20 µm or less, 10 um or less, or 7 µm or less. When the average particle diameter of silica is greater than the above range, strength of a cured product may be hardly improved.

The silica may have a BET specific surface area of 100 m²/g or more, 100 to 400 m²/g, or 100 to 300 m²/g. When the BET specific surface area of silica is within the above range, mechanical properties such as hardness and tensile strength of a resulting cured product may be effectively reinforced.

In addition, the silica may be one obtained by hydrophobizing a hydrophilic surface, and when using the silica having a surface thereof hydrophobicized, shelf life of a siloxane composition may be improved. In this case, materials that may be used in the hydrophobizing are, for example, 1,1,1,3,3,3-hexamethyldisilazane, divinyltetramethyl-disilazane, 1,1,3,3-tetramethyldisilazane, cyclosiloxane, and the like.

The silica may be included in a composition in an amount of 2 to 15 parts by weight, 3 to 10 parts by weight, or 4 to 9 parts by weight, with respect to 100 parts by weight of the total amount of the first to third organopolysiloxanes and organohydrogenpolysiloxane. When the silica amount is less than the above range, the siloxane composition may have too low thixotropic properties to maintain a dome shape by itself, and when the silica amount is greater than the above range, the siloxane composition may have too high thixotropic properties to be dispensed, making it hard in use, and a dome having a high aspect ratio is formed, thereby making it difficult to form a dome having an appropriate light diffusivity.

In addition, the siloxane composition may include the second organopolysiloxane and silica in a mass ratio of 1:0.1 to 1:0.4, a mass ratio of 1:0.1 to 1:0.25, or a mass ratio of 1:0.1 to 1:0.2. When the weight ratio of silica to the second organopolysiloxane is less than the above range, that is, when a small amount of silica is included, a cured product may not obtain a dome shape due to very low thixotropic properties of the composition, and when the weight ratio of silica to the second organopolysiloxane is greater than the above range, that is, when an excess of silica is included, a cured product may have less transmittance to cause a reduction in light efficiency.

The siloxane composition may include additives such as a nonionic surfactant, a catalyst, a curing retardant, and a tackifier.

### Nonionic surfactant

A nonionic surfactant serves to improve thixotropic properties of a siloxane composition when used along with a filler such as silica.

In addition, the nonionic surfactant may be used without any particular limitation as long as it is addible to the siloxane composition in general, and may be for example, polypropylene glycol.

The nonionic surfactant may be included in a composition in an amount of 0.1 to 8.0 parts by weight, 0.5 to 5.0 parts by weight, or 0.5 to 3.0 parts by weight, with respect to 100 parts by weight of the total amount of the first organopolysiloxane and the second organopolysiloxane. When the nonionic surfactant amount is less than the above range, a cured product may fail to reach target thixotropic properties to cause a failure in achieving a dome shape, and when the nonionic surfactant amount is greater than the above range, a cured product may have less transmittance to cause poor light efficiency.

### Catalyst

A catalyst is a catalyst for an addition curing reaction, and serves to promote a hydrosilylation reaction in a siloxane composition.

The catalyst is not particularly limited as long as it is commonly used as a catalyst for an addition curing reaction, but, for example, a platinum-based catalyst, a rhodium-based catalyst, and a palladium-based catalyst may be used.

The platinum-based catalyst may be, for example, platinum fine powder, platinum black, chloroplatinic acid, alcohol-modified product of chloroplatinic acid, a chloroplatinic acid/diolefin complex, a platinum/olefin complex, a platinum-carbonyl complex, a chloroplatinic acid/alkenylsiloxane complex, a platinum/alkenylsiloxane complex, and a complex of chloroplatinic acid and acetylene alcohol. In this case, when it comes to an addition curing reaction (a hydrosilylation reaction) performance, the catalyst may be a platinum/alkenylsiloxane complex. In addition, the complex may be included in a composition in a state of being dissolved in an organic solvent such as xylene.

The platinum-carbonyl complex may be, for example, platinum bis (acetoacetate) and platinum bis (acetylacetonate), and the chloroplatinic acid/alkenylsiloxane complex may be, for example, a chloroplatinic acid/divinyltetramethyldisiloxane complex and a chloroplatinic acid/tetravinyltetramethylcyclotetrasiloxane complex. In addition, the platinum/alkenylsiloxane complex may be, for example, a platinum/divinyltetramethyldisiloxane complex and a platinum/tetravinyltetramethylcyclotetrasiloxane complex.

The alkenylsiloxane of the complex may be, for example, 1,3-divinyl-1,1,3,3-tetramethyldisiloxane, 1,3-divinyl-1,1,3,3-tetraethyldisiloxane, 1,3-divinyl-1,1,3,3-tetraphenyldisiloxane, 1,3-diallyl-1,1,3,3-tetramethyldisiloxane, 1,3-dihexenyl-l, 1,3,3-tetramethyldisiloxane, 1,3,5,7-tetramethyl-1,3,5,7-tetravinylcyclotetrasiloxane, 1,3,5,7-tetraethyl-1,3,5,7-tetravinylcyclotetrasiloxane, 1,3,5,7-tetraphenyl-1,3,5,7-tetravinylcyclotetrasiloxane, 1,3,5,7-tetramethyl-1,3,5,7-tetraallylcyclotetrasiloxane, 1,3,5,7-tetramethyl-1,3,5,7-tetrahexenylcyclotetrasiloxane, and the like. In terms of producing platinum/alkenylsiloxane complex having excellent stability, the alkenylsiloxane may be 1,3-divinyl-1,1,3,3-tetramethyldisiloxane.

The catalyst is mixed in an amount to promote curing of a siloxane composition, but the mixing amount thereof is not particularly limited. For example, the catalyst may be included in an amount of 0.5 to 50 ppm, or 1 to 20 ppm, with respect to an amount of platinum out of a total weight of the siloxane composition. When the amount of the catalyst is less than the above range, the curing rate of the siloxane composition may be significantly reduced, resulting in reduced productivity, and when the amount of the catalyst is greater than the above range, pot life of the siloxane composition may be hardly secured, and yellowing occurs in a cured product upon heat curing, resulting in reduced optical performance.

### Curing retardant

A curing retardant serves to control the curing rate of a siloxane composition.

In addition, the curing retardant may be used without any particular limitation as long as it is addible to the siloxane composition in general, and may be, for example, 2-methyl-3-butan-2-ol, 1-ethynyl-2-cyclohexanol, 2 -phenyl-3-butan-2-ol, divinyltetramethyldisiloxane, cyclovinylsiloxane, and the like.

The curing retardant may be included in an amount of 1 parts by weight or less, or 0.0001 to 1 parts by weight, with respect to 100 parts by weight of the siloxane composition. When the curing retardant amount is greater than the above range, a resulting cured product may have less hardness, the siloxane composition may have less curing rate, or curing may not take place.

### Tackifier

A tackifier serves to improve adhesion to a substrate in contact with a cured product obtained from a siloxane composition.

In addition, the tackifier may be used without any particular limitation as long as it is addible to the siloxane composition, and may be, for example, an organosilicon-based compound. For example, the tackifier organosilane such as a trialkoxysiloxy group including trimethoxysiloxy and triethoxysiloxy and a trialkoxysilylalkyl group including trimethoxysilylethyl or triethoxysilylethyl; or an organosiloxane oligomer having any one functional group among a hydrosilyl-based, silicon-bonded alkenyl group, silicon-bonded methacryloxyalkyl group, and silicon-bonded epoxy-functional alkyl group. In this case, the epoxy-functional alkyl group may be, for example, 3-glycidoxypropyl, 4-glycidoxybutyl, 2-(3,4-epoxycyclohexyl)ethyl, 3-(3,4-epoxycyclohexyl)propyl, and the like. In addition, the tackifier may be, for example, epoxy-functional ethyl polysilicate, reaction products of an aminoalkyltrialkoxysilane with an epoxy-functional alkyltrialkoxysilane, and the like.

To be specific, the tackifier may include vinyltrimethoxysilane, allyltrimethoxysilane, allyltriethoxysilane, hydrogentriethoxysilane, 3-glycidoxypropyl trimethoxysilane, 3-glycidoxypropyl triethoxysilane, 2-(3,4-ethoxycyclohexyl)ethyl trimethoxysilane, 3-methacryloxypropyl trimethoxysilane, 3-methacryloxypropyl triethoxysilane, reaction products of 3-glycidoxypropyl triethoxysilane with 3-aminopropyl triethoxysilane, condensation reaction products of a silanol-endblocked methylvinylsiloxane oligomer with 3-glycidoxypropyl trimethoxysilane, condensation reaction products of a silanol-endblocked methylvinylsiloxane oligomer with 3-methacryloxypropyl triethoxysilane, or tris(3-trimethoxysilylpropyl)isocyanurate.

The tackifier may be included in an amount of 3 parts by weight or less, or 0.01 to 3 parts by weight, with respect to 100 parts by weight of the siloxane composition.

### Additive

The addition-curable siloxane composition may further include additives commonly used in the art, and may include, for example, an inorganic filler, silicone rubber powder, resin powder, a heat resistance agent, antioxidant, radical scavenger, light stabilizer, dye, pigments, and flame retardant additives.

The addition-curable siloxane composition according to the present invention may have a viscosity of 10 to 50 Pa·s or 10 to 30 Pa·s at 25 °C. In addition, a cured product having a thixotropic index of 2.0 to 4.0 or 2.1 to 3.9 at 25 °C. In this case, the thixotropic index is a value of [viscosity at 25 °C at a shear rate of 1/s] / [viscosity at 25 °C at a shear rate of 10/s].

In addition, a cured product having an average thickness of 6 mm, obtained from the addition-curable siloxane composition may have a hardness of 20 to 40 shore D, or 22 to 37 shore D.

The cured product having an average thickness of 2 mm, obtained from the addition-curable silicone composition may have a transmittance of 85% or more, or 85 to 95% for light having a wavelength of 450 nm.

As described above, the addition-curable siloxane composition according to the present invention has, with an appropriate viscosity, excellent fluidity, has excellent thixotropic properties, and is capable of obtaining a cured film having excellent transparency, and thus is quite suitable as a sealing material for self-dome shaped light emitting diodes even on flat substrates without walls or dams. In addition, the addition-curable siloxane composition is capable of obtaining a cured film having excellent hardness and adhesion to be applicable to various areas such as a sealing material, an adhesive, a coating agent, a potting agent, and a sealing agent of an LED element.

### Electronic/electrical device

In addition, an electronic/electric device according to the present invention includes a cured product obtained by curing the addition-curable siloxane composition.

In this case, the electronic/electric device may be a light emitting diode (LED).

### MODE FOR CARRYING OUT THE INVENTION

Hereinafter, the present invention will be described in more detail through embodiments. However, these embodiments are provided to assist understanding of the present invention, and the scope of the present invention is not limited to the embodiments in any sense.

### Experimental Example 1. Preparation of addition-curable siloxane composition

In a reaction vessel, 20.9 g of a first organopolysiloxane-2, 36.8 g of a second organopolysiloxane-1, 7.4 g of an organohydrogenpolysiloxane, 27.0 g of a third organopolysiloxane, 6.5 g of silica, and 0.49 g of a curing retardant were added and stirred with a hand mixer for 10 minutes. Then, 0.5 g of a nonionic surfactant, 0.4 g of a tackifier, and 0.01 g of a catalyst were added and stirred with a hand mixer for 10 minutes, and then bubbles were removed in a desiccator with a vacuum of 20 torr or less to obtain a colorless and transparent addition-curable siloxane composition.

### Experimental Examples 2 to 21. Preparation of addition-curable siloxane compositions

Addition-curable siloxane compositions were obtained using components formulated as shown in Tables 1 to 3. In this case, "the moles of a vinyl group in the organopolysiloxane" is the total moles of a vinyl group in the first organopolysiloxane, a vinyl groups in the second organopolysiloxane, and a vinyl group in the third organopolysiloxane.

**[Table 1]**

| (wt%) | Experim ental Example 1 | Experim ental Example 2 | Experim ental Example 3 | Experim ental Example 4 | Experim ental Example 5 | Experim ental Example 6 | Experim ental Example 7 |
|---|---|---|---|---|---|---|---|
| Organopolysilo xane-1 | | | | | | | |
| First organopolysilo xane-1 | | 20.9 | | | | | |
| First organopolysilo xane-2 | 20.9 | | 20.9 | 25.9 | 20.9 | 17.5 | 23.9 |
| Second organopolysilo xane-1 | 36.8 | 36.8 | | 46.8 | 39.2 | | 27.3 |
| Second organopolysilo xane-2 | | | 36.8 | | | 48.6 | |
| Organohydrogen polysiloxane | 7.4 | 7.4 | 7.4 | 9.4 | 5 | 18 | 19.4 |
| Organopolysilo xane-2 | | | | | | | |
| Organopolysilo xane-3 | | | | | | | |
| Third organopolysilo xane | 27.0 | 27.0 | 27.0 | 10.0 | 27.0 | 9.5 | 25.0 |
| Silica | 6.5 | 6.5 | 6.5 | 6.5 | 6.5 | 5 | 3 |
| Nonionic surfactant | 0.5 | 0.5 | 0.5 | 0.5 | 0.5 | 0.5 | 0.5 |
| Tackifier | 0.4 | 0.4 | 0.4 | 0.4 | 0.4 | 0.4 | 0.4 |
| Catalyst | 0.01 | 0.01 | 0.01 | 0.01 | 0.01 | 0.01 | 0.01 |
| Curing retardant | 0.49 | 0.49 | 0.49 | 0.49 | 0.49 | 0.49 | 0.49 |
| Total amount | 100 | 100 | 100 | 100 | 100 | 100 | 100 |
| Second organopolysilo xane / first organopolysilo xane | 1.76 | 1.76 | 1.76 | 1.81 | 1.88 | 2.78 | 1.14 |
| No. of moles of SiH in organohydrogen polysiloxane / No. of moles of vinyl groups in organopolysilo xane | 0.808 | 0.853 | 0.801 | 1.084 | 0.542 | 2.664 | 2.068 |

**[Table 2]**

| (wt %) | Experime ntal Example 8 | Experime ntal Example 9 | Experime ntal Example 10 | Experime ntal Example 11 | Experime ntal Example 12 | Experime ntal Example 13 | Exper iment al Examp le 14 |
|---|---|---|---|---|---|---|---|
| Organopoly siloxane-1 | | | | 20.9 | | | |
| First organo polysiloxane-1 | | | | | | | |
| First organo polysiloxane-2 | 20.9 | 20.9 | 20.9 | | 10.9 | 10.9 | 29.9 |
| Second organopoly siloxane-1 | 36.3 | 37 | 34.8 | 36.8 | 36.8 | 36.8 | 49.8 |
| Second | | | | | | | |
| organopoly siloxane-2 | | | | | | | |
| Organohydrogen polysiloxane | 7.4 | 7.4 | 7.4 | 7.4 | 7.4 | 7.4 | 8.4 |
| Organopoly siloxane-2 | | | | | 10 | | |
| Organopoly siloxane-3 | | | | | | 10 | |
| Third organo polysiloxane | 27.0 | 27.0 | 27.0 | 27 | 27 | 27 | 3.0 |
| Silica | 7 | 6.5 | 6.5 | 6.5 | 6.5 | 6.5 | 7.5 |
| Nonionic surfactant | 0.5 | 0.3 | 2.5 | 0.5 | 0.5 | 0.5 | 0.5 |
| Tackifier | 0.4 | 0.4 | 0.4 | 0.4 | 0.4 | 0.4 | 0.4 |
| Catalyst | 0.01 | 0.01 | 0.01 | 0.01 | 0.01 | 0.01 | 0.01 |
| Curing retardant | 0.49 | 0.49 | 0.49 | 0.49 | 0.49 | 0.49 | 0.49 |
| Total amount | 100 | 100 | 100 | 100 | 100 | 100 | 100 |
| Second organopoly siloxane / first organopoly siloxane | 1.74 | 1.77 | 1.67 | 1.76 | 3.38 | 3.38 | 1.67 |
| No. of moles of SiH in organohydrogen polysiloxane / No. of moles of vinyl groups in organopoly siloxane | 0.810 | 0.808 | 0.813 | 0.879 | 1.045 | 1.091 | 0.943 |

**[Table 3]**

| (wt %) | Experime ntal Example 15 | Experime ntal Example 16 | Experime ntal Example 17 | Experime ntal Example 18 | Experime ntal Example 19 | Experime ntal Example 20 | Experim ental Example 21 |
|---|---|---|---|---|---|---|---|
| Organopolys iloxane-1 | | | | | | | |
| First organopolys iloxane-1 | | | | | | | |
| First organopolys iloxane-2 | 10 | 50.9 | 5.9 | 20.4 | 20.9 | 20.9 | 20.9 |
| Second organopolys iloxane-1 | 43.1 | 6.8 | 34.8 | 42.8 | 30.3 | 37.3 | 32.8 |
| Second organopolys iloxane-2 | | | | | | | |
| Organohydro genpolysilo xane | 6.5 | 2.4 | 20 | 7.4 | 7.4 | 7.4 | 7.4 |
| Organopolys iloxane-2 | | | | | | | |
| Organopolys iloxane-3 | | | | | | | |
| Third organopolys iloxane | 35 | 32.0 | 27.0 | 27.0 | 27.0 | 27.0 | 27.0 |
| Silica | 4 | 6.5 | 10.9 | 1 | 13 | 6.5 | 6.5 |
| Nonionic surfactant | 0.5 | 0.5 | 0.5 | 0.5 | 0.5 | 0.03 | 4.5 |
| Tackifier | 0.4 | 0.4 | 0.4 | 0.4 | 0.4 | 0.4 | 0.4 |
| Catalyst | 0.01 | 0.01 | 0.01 | 0.01 | 0.01 | 0.01 | 0.01 |
| Curing retardant | 0.49 | 0.49 | 0.49 | 0.49 | 0.49 | 0.49 | 0.49 |
| Total amount | 100 | 100 | 100 | 100 | 100 | 100 | 100 |
| Second organopolys iloxane / first organopolys iloxane | 4.31 | 0.13 | 5.90 | 2.10 | 1.45 | 1.78 | 1.57 |
| No. of moles of SiH in organohydro genpolysilo xane / No. of moles of vinyl groups in organopolys iloxane | 0.852 | 0.149 | 3.639 | 0.804 | 0.825 | 0.807 | 0.818 |

Manufacturers and product names of respective components used in Experimental Examples are shown in Table 4, where Vi is a vinyl group, Me is a methyl group, and Ph is a phenyl group. In addition, the refractive index of the following polysiloxane is a value measured using an Abbe refractometer at 25 °C.

**[Table 4]**

| Element | Remarks |
|---|---|
| Organopolysiloxane-1 | M^{Vi} 20 mol%, M^{Me} 10 mol%, T^{Me} 15 mol%, T^{Ph} 55 mol% (refractive index for wavelength 589 nm: 1.52, phenyl group amount: 34.4 mol%, vinyl group amount: 12.5 mol%) |
| First organopolysiloxane-1 | M^{Vi} 20 mol%, M^{Me} 10 mol%, T^{Me} 25 mol%, T^{Ph} 45 mol% (refractive index for wavelength 589 nm: 1.50, phenyl group amount: 28.1 mol%, vinyl group amount: 12.5 mol%) |
| First organopolysiloxane-2 | M^{Vi} 20 mol%, M^{Me} 10 mol%, T^{Me} 45 mol%, T^{Ph} 25 mol% (refractive index: 1.48, phenyl group amount: 15.6 mol%, vinyl group amount: 12.5 mol%) |
| Second organopolysiloxane-1 | M^{Vi} 2.4 mol%, M^{Me} 32.6 mol%, D^{Me} 31 mol%, T^{Ph} 34 mol% (refractive index: 1.47, phenyl group amount: 16.9 mol%, vinyl group amount: 1.2 mol%, viscosity at 25 °C: 2,800 mPa·s) |
| Second organopolysiloxane-2 | M^{Vi} 2.4 mol%, M^{Me} 37.6 mol%, D^{Me} 40 mol%, T^{Ph} 20 mol% (refractive index: 1.43, phenyl group amount: 9.1 mol%, vinyl group amount: 1.1 mol%, viscosity at 25 °C: 1,600 mPa·s) |
| Organohydrogenpolysiloxane | M^{H} 75 mol%, T^{Ph} 25 mol% (refractive index: 1.44, phenyl group amount: 14.3 mol%, vinyl group amount: 0 mol%, viscosity at 25 °C: 10 mPa·s) |
| Organopolysiloxane-2 | M^{Vi} 2.4 mol%, M^{Me} 2.6 mol%, D^{Me} 85 mol%, T^{Ph} 10 mol% (refractive index: 1.42, phenyl group amount: 5.1 mol%, vinyl group amount: 1.2 mol%, viscosity at 25 °C: 250 mPa·s) |
| Organopolysiloxane-3 | M^{Vi} 0.2 mol%, D^{Me} 99.8 mol% (refractive index: 1.41, phenyl group amount: 0 mol%, vinyl group amount: 0.1 mol%, viscosity at 25 °C: 100 mPa·s) |
| Third organopolysiloxane | M^{Vi} 7.5 mol%, M^{Me} 42.5 mol%, Q 50 mol% |
| | (vinyl group amount: 11.5 mol%) |
| Silica | Fumed silica (BET specific surface area: 200 m²/g) |
| Nonionic surfactant | Polypropylene glycol (weight average molecular weight: 2,000 g/mol) |
| Tackifier | 2-(3,4-epoxycyclohexyl)ethyltrimethoxysilane |
| Catalyst | Complex of platinum and 1,3-divinyl-1,1,3,3-tetramethyldisiloxane (platinum amount: 1 wt%) |
| Curing retardant | 1-ethynyl-2-cyclohexanol |

### Test Example: Evaluation of characteristics

Physical properties of the addition-curable siloxane compositions of Experimental Examples and the cured products obtained therefrom were measured in the following manner, and the results are shown in Table 5.

Specifically, the cured products were obtained by curing the addition-curable silicone compositions of Experimental Examples for 10 minutes at 190 °C, using a mold capable of forming the addition-curable silicone compositions having an average thickness of 2 mm or 6 mm.

### (1) Viscosity and Thixotropic Index

Using a rheometer (MCR302, Anton Paar) for addition-curable siloxane compositions of Experimental Examples, viscosity at 25 °C at a shear rate of 10/s was measured and thixotropic index was calculated through (viscosity at a shear rate of 1/s)/(viscosity at a shear rate of 101s).

### (2) Hardness

The cured product having an average thickness of 6 mm was measured at 25 °C using a Shore D-type hardness meter (ASKER TYPE D from KOBUNSHI KEIKI).

### (3) Transmittance

Transmittance of the cured product having an average thickness of 2 mm was measured for light having a wavelength of 450 nm using a spectrophotometer (U-3900H from HITACHI).

### (4) Adhesion

An addition-curable siloxane composition was applied between two aluminum substrates and cured at 150 °C for 30 minutes to be 10 mm wide, 5 mm wide, and 1 mm high, and then using a UTM facility, the two aluminum substrates were pulled from both sides to measure maximum stress at which silicone is broken from the aluminum substrates.

**[Table 5]**

| | Viscosity (mPa·s) | Thixotropic index | Hardness (Shore D) | Transmittance (%) | Adhesion (MPa) |
|---|---|---|---|---|---|
| Experimental Example 1 | 20,100 | 2.7 | 32 | 89.10 | 4.50 |
| Experimental Example 2 | 16,800 | 2.7 | 35 | 88.60 | 4.20 |
| Experimental Example 3 | 22,400 | 2.9 | 23 | 89.90 | 3.90 |
| Experimental Example 4 | 20,100 | 2.7 | 32 | 89.10 | 3.80 |
| Experimental Example 5 | 15,200 | 2.5 | 28 | 86.10 | 3.70 |
| Experimental Example 6 | 23,500 | 3.1 | 24 | 90.20 | 4.20 |
| Experimental Example 7 | 22,300 | 2.1 | 30 | 91.30 | 4.30 |
| Experimental Example 8 | 26, 100 | 3.8 | 32 | 87.10 | 4.50 |
| Experimental Example 9 | 17,100 | 2.4 | 32 | 89.70 | 4.10 |
| Experimental Example 10 | 23,700 | 3.5 | 29 | 87.90 | 3.90 |
| Experimental Example 11 | 22,900 | 2.7 | 35 | 80.10 | 3.70 |
| Experimental | 14,800 | 2.7 | 26 | 65.10 | 1.90 |
| Example 12 | | | | | |
| Experimental Example 13 | 12,400 | 3.1 | 14 | 60.80 | 1.30 |
| Experimental Example 14 | 18,700 | 2.8 | 34 | 88.70 | 0.90 |
| Experimental Example 15 | 93, 900 | 1.8 | 15 | 92.20 | 3.98 |
| Experimental Example 16 | 43,500 | 2.5 | 0 | 90.90 | 0.55 |
| Experimental Example 17 | 23,500 | 3.1 | 25 | 87.50 | 2.66 |
| Experimental Example 18 | 15,900 | 1.7 | 29 | 90.80 | 3.45 |
| Experimental Example 19 | 45,300 | 4.4 | 32 | 61.60 | 3.67 |
| Experimental Example 20 | 17,100 | 1.4 | 32 | 89.90 | 3.85 |
| Experimental Example 21 | 20,100 | 3.5 | 26 | 77.90 | 3.64 |

As shown in Table 5, it is seen that the addition-curable siloxane compositions of Experimental Examples 1 to 10 had appropriate viscosity and thixotropic index at 25 °C, and were capable of obtaining cured products having excellent hardness, transmittance, and adhesion, making them quite suitable as sealing materials for light emitting diodes having a self-dome shape even on a flat substrate without a wall or a dam.

On the other hand, Experimental Example 11 containing organopolysiloxane-1 having a high refractive index of 1.52 with respect to a wavelength of 589 nm and an excess of a phenyl group and Experimental Example 21 containing an excess of a nonionic surfactant had a low transmittance for light having a wavelength of 450 nm, making them unsuitable as sealing materials for LED elements.

In addition, Experimental Examples 12 and 13 containing organopolysiloxane-2 having a low refractive index of 1.42 for a wavelength of 589 nm or organopolysiloxane-3 having a low refractive index of 1.41 had a low transmittance for light having a wavelength of 450 nm and lacked adhesion. In particular, in Experimental Example 13 containing organopolysiloxane-3 not including a phenyl group, the cured product had also very poor hardness.

In Experimental Example 14 containing a small amount of the third organopolysiloxane and Experimental Example 16 containing a small amount of the organohydrogenpolysiloxane, the cured products had very poor adhesion. In particular, in Experimental Example 16, in which a small amount of the second organopolysiloxane is included with respect to the weight of the first organopolysiloxane, the cured product had also very poor hardness.

In addition, the composition of Experimental Example 15 containing an excess of the third organopolysiloxane had an excessively high viscosity at 25 °C and a very low thixotropic index, resulting in very poor workability.

In Experimental Example 17 containing an excess of organohydrogenpolysiloxane and having an excess of the second organopolysiloxane is included with respect to the weight of the first organopolysiloxane, the cured product had poor adhesion.

In addition, in Experimental Example 18 containing a small amount of silica and Experimental Example 20 containing a small amount of a nonionic surfactant, the compositions had a low thixotropic index, and thus lacked workability.

Experimental Example 19 included an excess of silica to have the cured product with insufficient transmittance for light having a wavelength of 450 nm, and had an excess of silica with respect to the weight of the second organopolysiloxane to have the composition with an excessively high thixotropic index.

## Claims

1. An addition-curable siloxane composition comprising:
a first organopolysiloxane comprising an aryl group and having a refractive index of 1.48 to 1.50 with respect to a wavelength of 589 nm;
a second organopolysiloxane comprising an aryl group and having a refractive index of 1.43 to 1.47 with respect to a wavelength of 589 nm;
a third organopolysiloxane not comprising an aryl group but comprising an alkenyl group directly bonded to silicon;
an organohydrogenpolysiloxane comprising a hydrogen group directly bonded to silicon and having a refractive index of 1.43 to 1.50 with respect to a wavelength of 589 nm; and
silica.

2. The addition-curable siloxane composition of claim 1, wherein the first organopolysiloxane is represented by Formula 1 below:
[Formula 1] [R¹R²R³SiO_{1/2}]ₐ[R⁴SiCO_{3/2}]_{b}[R⁵SiCO_{3/2}]_{c}[SiO_{4/2]a}
wherein in Formula 1,
R¹ to R³ are each independently a substituted or unsubstituted C₁₋₁₀ alkyl group, C₂₋₁₀ alkenyl group, or C₁₋₁₀ alkoxy group,
R⁴ and R⁵ are each independently a substituted or unsubstituted C₁₋₁₀ alkyl group, C₁₋₁₀ alkoxy group, or C₆₋₁₂ aryl group, where at least one is an aryl group,
a is greater than 0 and less than 1,
b is 0 or more and less than 1,
c+d is greater than 0 and less than 1, and
a+b+c+d is 1.

3. The addition-curable siloxane composition of claim 1, wherein the second organopolysiloxane is represented by Formula 2 below:
[Formula 2] [R⁶R⁷R⁸SiO_{1/2}]ₑ[R⁹R¹⁰SiO_{2/2}]_{f}[R¹¹SiO_{3/2}]_{g}[SiO_{4/2]h}
wherein in Formula 2 above,
R⁶ to R⁸ are each independently a substituted or unsubstituted C₁₋₁₀ alkyl group, C₂₋₁₀ alkenyl group, or C₁₋₁₀ alkoxy group,
R⁹ to R¹¹ are each independently a substituted or unsubstituted C₁₋₁₀ alkyl group, C₁₋₁₀ alkoxy group, or C₆₋₁₂ aryl group, where at least one is an aryl group,
e is greater than 0 and less than 1,
f is 0 or more and less than 1,
g+h is greater than 0 and less than 1, and
e+f+g+h is 1.

4. The addition-curable siloxane composition of claim 1, wherein the third organopolysiloxane is represented by Formula 3 below:
[Formula 3] [R¹⁵R¹⁶R¹⁷SiO_{1/2}]ᵢ[R¹⁸R¹⁹SiO_{2/2}]ⱼ[SiO_{4/2}]ₖ
wherein in Formula 3 above,
R¹⁵ to R¹⁹ are each independently a substituted or unsubstituted C₁₋₁₀ alkyl group, C₂₋₁₀ alkenyl group, or C₁₋₁₀ alkoxy group, where at least one is an alkenyl group,
i is greater than 0 and less than 1,
j is 0 or more and less than 1,
k is greater than 0.2 and less than 1, and
i+j+k is 1.

5. The addition-curable siloxane composition of claim 1, further comprising a nonionic surfactant.

6. The addition-curable siloxane composition of claim 1, wherein the first organopolysiloxane and the second organopolysiloxane are contained in a weight ratio of 1: 0.3 to 5.0.

7. An electronic/electrical device comprising a cured product obtained by curing the addition-curable siloxane composition of any one of claims 1 to 6.
